# EUROPEAN PATENT APPLICATION

(11) **EP 4 383 873 A1**
(43) Date of publication of application: **12.06.2024**
(21) Application number: 21952159.8
(22) Date of filing: 02.08.2021
(51) Int. Cl.: H04W 72/04, H04W 84/12

(54) **COMMUNICATION METHOD AND APPARATUS, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2021/110110
(87) International publication number: WO 2023/010249

(57) **Abstract**

The present disclosure relates to the technical field of mobile communications and provides a communication method and apparatus, an electronic device, and a storage medium. The communication method comprises: sending a multi-user request to send (MU-RTS) frame, the MU-RTS frame comprising transmission opportunity (TXOP) sharing information, the TXOP sharing information comprising a target transmission duration allocated to a first station device (STA), and the target transmission duration being used for transmitting data by the first STA to a target access point (AP) device or to a second STA. Embodiments of the present disclosure provides an approach to realize TXOP sharing.

## Description

### TECHNICAL FIELD

The present disclosure relates to the field of mobile communication technology, and more specifically, the present disclosure relates to a communication method and apparatus, an electronic device, and a storage medium.

### BACKGROUND

With the rapid development of mobile communication technology, Wireless Fidelity (Wi-Fi) technology has made great progress in terms of transmission rate and throughput. Currently, Wi-Fi technology has been studied in such aspects as 320MHz bandwidth transmission, multi-band aggregation and coordination, etc., and for example, its main application scenarios are video transmission, Augmented Reality (AR), Virtual Reality (VR), etc.

Specifically, multi-band aggregation and coordination refers to the communication between devices in 2.4GHz, 5.8GHz, 6GHz and other frequency bands at the same time, and for the scenarios where the devices communicate in multiple frequency bands at the same time, it is also necessary to define a new Media Access Control (MAC) mechanism for management. In addition, multi-band aggregation and coordination is expected to support low-latency transmission.

Currently, the maximum bandwidth that will be supported in multi-band aggregation and collaboration technology is 320MHz (160MHz+160MHz). In addition, in multi-band aggregation and collaboration technology, it may also support 240MHz (160MHz+80MHz) and other bandwidths supported by existing standards.

In the currently studied Wi-Fi technology, the Transmission Opportunity (TXOP) mechanism is introduced in order to improve the spectrum utilization and to adapt to the high-density communication environment. When the Access Point (AP) obtains the TXOP, it will trigger the Station (STA) to send data within the time period of TXOP through Multi-User Request To Send (MU-RTS) frames to realize the TXOP sharing to the STA. Therefore, there is a need to provide a way to realize TXOP sharing.

### SUMMARY

Embodiments of the present disclosure provide a communication method and apparatus, an electronic device, and a storage medium, and provide a way to realize TXOP sharing.

According to one aspect, the embodiments of the disclosure provide a communication method, including:
sending a multi-user request to send MU-RTS frame; where the MU-RTS frame includes transmission opportunity TXOP sharing information, the TXOP sharing information includes a target transmission duration allocated to a first station device STA, and the target transmission duration is configured for the first STA to transmit data to a target access point AP device or a second STA.

According to another aspect, the embodiments of the disclosure also provide a communication method, performed by a first station device STA, including:
receiving a multi-user request to send MU-RTS frame; where the MU-RTS frame includes transmission opportunity TXOP sharing information, the TXOP sharing information includes a target transmission duration allocated to the first STA, and the target transmission duration is configured for the first STA to transmit data to a target access point AP device or a second STA.

According to another aspect, the embodiments of the disclosure also provide an access point device, including:
a sending module for sending a multi-user request to send MU-RTS frame; where the MU-RTS frame includes transmission opportunity TXOP sharing information, the TXOP sharing information includes a target transmission duration allocated to a first station device STA, and the target transmission duration is configured for the first STA to transmit data to a target access point AP device or a second STA.

According to another aspect, the embodiments of the disclosure also provide a station device, where the station device is a first station device STA, and the station device includes:
a receiving module for receiving a multi-user request to send MU-RTS frame; where the MU-RTS frame includes transmission opportunity TXOP sharing information, the TXOP sharing information includes a target transmission duration allocated to the first STA, and the target transmission duration is configured for the first STA to transmit data to a target access point AP device or a second STA.

According to another aspect, the embodiments of the disclosure also provide a communication device, including:
a MU-RTS sending module for sending a multi-user request to send MU-RTS frame; where the MU-RTS frame includes transmission opportunity TXOP sharing information, the TXOP sharing information includes a target transmission duration allocated to a first station device STA, and the target transmission duration is configured for the first STA to transmit data to a target access point AP device or a second STA.

According to another aspect, the embodiments of the disclosure also provide a communication device, applied to a first station device STA, including:
a MU-RTS receiving module for receiving a multi-user request to send MU-RTS frame; where the MU-RTS frame includes transmission opportunity TXOP sharing information, the TXOP sharing information includes a target transmission duration allocated to the first STA, and the target transmission duration is configured for the first STA to transmit data to a target access point AP device or a second STA.

The embodiments of the disclosure also provide an electronic device, including a memory, a processor and a computer program stored on the memory and executable on the processor, where the processor executes the program to implement the method according to one or more of the embodiments of the present disclosure.

The embodiments of the disclosure also provide a computer-readable storage medium, where a computer program is stored thereon, and the computer program, when executed by a processor, implements the method according to one or more of the embodiments of the present disclosure.

In an embodiment of the present disclosure, an AP sends a MU-RTS frame and carries transmission opportunity TXOP sharing information in the MU-RTS frame, the TXOP sharing information includes a target transmission duration allocated to a first STA, and the target transmission duration is configured for the first STA to transmit data to a target AP device or a second STA to share the TXOP to the STA, realizing the data transmission of the STA and enhancing the frequency utilization rate.

Additional aspects and advantages of embodiments of the present disclosure will be given in part in the following description, which will become apparent from the following description or learned through the practice of the present disclosure.

### BRIEF DESCRIPTION OF THE DRAWINGS

In order to more clearly illustrate the technical solutions of the embodiments of the present disclosure, the accompanying drawings to be used in the description of the embodiments of the present disclosure will be briefly introduced below, and it will be obvious that the accompanying drawings in the following description are only some of the embodiments of the present disclosure, and that other accompanying drawings may be obtained based on these drawings for the those skilled in the field, without paying inventive labor.
FIG. 1 shows a flowchart of a communication method provided by embodiments of the present disclosure;
FIG. 2 shows a flowchart of a communication method provided by embodiments of the present disclosure;
FIG. 3 shows a schematic diagram of a third example of embodiments of the present disclosure;
FIG. 4 shows a schematic diagram of a fourth example of an embodiment of the present disclosure;
FIG. 5 shows a flowchart of a communication method provided by embodiments of the present disclosure;
FIG. 6 shows a flowchart of a communication method provided by embodiments of the present disclosure;
FIG. 7 shows a schematic diagram of a structure of a communication device provided by embodiments of the present disclosure;
FIG. 8 shows a schematic diagram of a structure of a communication device provided by embodiments of the present disclosure;
FIG. 9 shows a schematic diagram of a structure of an electronic device provided by embodiments of the present disclosure.

### DETAILED DESCRIPTION

The term "and/or" in embodiments of the present disclosure describes an association relationship of the associated objects, indicating that three relationships may exist. For example, A and/or B may be expressed as: A alone, both A and B, and B alone. The character "/" generally indicates that the associated objects are in an "or" relationship.

The term "multiple" in the embodiments of the present disclosure refers to two or more, and other quantifiers are similar.

Exemplary embodiments will be described in detail herein, examples of which are shown in the accompanying drawings. When the following description relates to the accompanying drawings, unless otherwise indicated, the same numbers in different drawings indicate the same or similar elements. The embodiments described in the following exemplary embodiments do not represent all embodiments consistent with the present disclosure. Rather, they are merely examples of devices and methods consistent with some aspects of the present disclosure as detailed in the appended claims.

The terminology used in this disclosure is used solely for the purpose of describing particular embodiments and is not intended to limit the present disclosure. The singular forms of "a", "said," and "the" used in this disclosure and the appended claims are also intended to encompass the majority form, unless the context clearly indicates otherwise. It should also be understood that the term "and/or" as used herein refers to and includes any or all possible combinations of one or more of the associated listed items.

It should be understood that while the terms first, second, third, etc. may be used in the present disclosure to describe various pieces of information, such information should not be limited to these terms. These terms are used only to distinguish the same type of information from one another. For example, without departing from the scope of the present disclosure, first information may also be referred to as second information, and similarly, second information may be referred to as first information. Depending on the context, for example, the term "if" as used herein may be interpreted as "at ......" or "when ......" or "in response to determining".

The technical solutions in the embodiments of the present disclosure will be described clearly and completely in the following in conjunction with the accompanying drawings in the embodiments of the present disclosure, and it is clear that the described embodiments are only a part of the embodiments of the present disclosure, and not all of the embodiments. Based on the embodiments in the present disclosure, all other embodiments obtained by those skilled in the art without making inventive labor fall within the scope of protection of the present disclosure.

Embodiments of the present disclosure provide a communication method and apparatus, a terminal, and a network device for providing a way to realize TXOP sharing.

The method and the apparatus are based on the same application conception, and since the method and the apparatus solve the problem with similar principles, the implementations of the apparatus and the method can be referred to each other, and the repetitions will not be repeated.

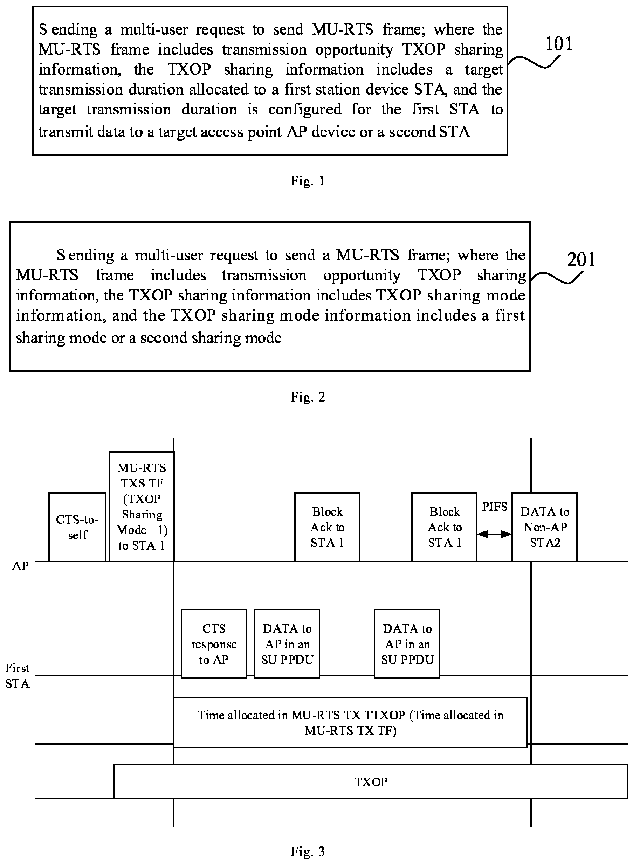

As shown in FIG. 1, embodiments of the present disclosure provide a communication method. For example, the method may be applied to an AP (device), and the method may include the following steps:

Step 101, sending a multi-user request to send MU-RTS frame; where the MU-RTS frame includes transmission opportunity TXOP sharing information, the TXOP sharing information includes a target transmission duration allocated to a first station device STA, and the target transmission duration is configured for the first STA to transmit data to a target access point AP device or a second STA.

In a wireless communication system, an AP occupies a channel through a competition mechanism, such as the Carrier Sense Multiple Access with Collision Avoidance (CSMA/CA) competition process. After AP wins the competition, the AP initiates a TXOP transmission time, during which the channel is reserved to be occupied by the AP, and the transmissions for the remaining nodes are delayed. After the AP obtains the TXOP transmission time, it can send MU-RTS frames to multiple STAs.

MU-RTS frames are Trigger Frames, which are mainly used for channel reservation and Resource Units (RU) allocation. Specifically, the MU-RTS sent by the AP is transmitted over the entire channel, and the node is in a passive receiving state and does not actively compete for the channel, realizing the AP reservation channel. In addition, based on the trigger frame attribute of the MU-RTS frame, it includes the RU allocation field.

TXOP sharing allows the AP to allocate a portion of the time within the acquired TXOP to the STA for transmitting data. After the AP has acquired a TXOP transmission opportunity, the AP sends a MU-RTS frame to the STA. The MU-RTS frame includes the transmission opportunity TXOP sharing information, and the TXOP sharing information includes the target transmission duration allocated to the first station device STA, and the AP shares the transmission time within TXOP to the first STA, and indicates a target transmission duration shared to the first STA, such that the first STA transmits data within the time of the target transmission duration.

The target transmission duration is configured for the first STA to transmit data to a target access point AP device or a second STA; where the target AP device (or the target AP) may be an AP device (e.g., Associated AP) having an association relationship with the first STA, the association relationship is, for example, a communication connection (Link) with the first STA, and during the time corresponding to the target transmission duration, the first STA may send a Presentation Protocol Data Unit (PPDU) to the target AP. The first STA may also send the PPDU(s) to the second STA to realize peer-to-peer transmission (P2P).

For example, the total duration of a single TXOP is typically on the order of milliseconds, e.g., N milliseconds; when the AP shares the TXOP with the STA, the transmission time may be allocated to the STA in units of Time Units (TUs), with each TU having a duration of 1 microsecond (µs), 8 µs, or 16 µs; four bits or more may be configured to identify the target transmission duration. For example, when identifying by four bits, "0011" identifies three TUs.

In an embodiment of the present disclosure, the AP sends a MU-RTS frame and carries transmission opportunity TXOP sharing information in the MU-RTS frame. The TXOP sharing information includes a target transmission duration allocated to the first STA, the target transmission duration is configured for the first STA to transmit data to the target AP device or the second STA, which can share the TXOP to the STA, realize the data transmission of the STA, and enhance frequency utilization rate.

In an embodiment, the TXOP sharing information includes a first association identifier AID of the first STA.

The AID table of the target AP device includes the first AID.

The Association Identifier (AID) is configured to identify the STA, and the AID corresponds to the target transmission duration; an AID Table is set on the AP side, and the Association ID Table includes the AID corresponding to the AP, and the AID is pre-bound to the Media Access Control (MAC) layer address of the corresponding STA. For example, if the range of AID is from 0 to 2007, an AP can associate up to 2007 nodes; where the position of AID-0 is a reserved field and is not allocated to the STA to represent all multicasts and broadcasts. Upon receipt of an Association Request frame (Association Request) initiated by the STA, the target AP feeds back an Association Response frame (Association Response) and allocates the AID to the STA and informs it of the AID in the Association Response frame.

The TXOP sharing information includes a first association identifier AID of the first STA, which facilitates the first STA to determine the target AP based on the AID table where the first AID is located.

As shown in FIG. 2, embodiments of the present disclosure provide a communication method. For example, the method may be applied to an AP (device), which may include the following steps:
Step 201, sending a multi-user request to send a MU-RTS frame; where the MU-RTS frame includes transmission opportunity TXOP sharing information, the TXOP sharing information includes a target transmission duration allocated to a first station device STA, and the target transmission duration is configured for the first STA to transmit data to a target access point AP device or a second STA.

In a wireless communication system, an AP occupies a channel through a competition mechanism, such as the CSMA/CA competition process. After the AP wins the competition, the AP initiates a TXOP transmission time, during which the channel is reserved to be occupied by the AP, and transmissions for the remaining nodes are delayed. After the AP obtains the TXOP transmission time, it can send MU-RTS frames to multiple STAs.

MU-RTS frames are Trigger Frames, which are mainly used for channel reservation and Resource Unit RU allocation. Specifically, the MU-RTS sent by the AP is transmitted over the entire channel, and the node is in a passive receiving state and does not actively compete for the channel, realizing the AP reservation channel. In addition, based on the trigger frame attribute of the MU-RTS frame, it includes the RU allocation field.

TXOP sharing allows the AP to allocate a portion of the time within the acquired TXOP to the STA for transmitting data. After the AP has acquired a TXOP transmission opportunity, the AP sends a MU-RTS frame to the STA. The MU-RTS frame includes the transmission opportunity TXOP sharing information, and the TXOP sharing information includes the target transmission duration allocated to the first station device STA, and the AP shares the transmission time within TXOP to the first STA, and indicates a target transmission duration shared to the first STA, such that the first STA transmits data within the time of the target transmission duration.

The TXOP sharing information includes TXOP sharing mode information.

The TXOP sharing mode information includes a first sharing mode or a second sharing mode.

In the first sharing mode, the target transmission duration is configured for the first STA to transmit data to a target AP device; the target AP device (or target AP) may be an AP device having an association relationship with the first STA, the association relationship is, for example, a communication connection (Link) with the first STA, and during the time corresponding to the target transmission duration, the first STA may send PPDU(s) to the target AP.

In the second sharing mode, the target transmission duration is configured for the first STA to transmit data to the second STA, and the first STA may also send PPDU(s) to the second STA, realizing peer-to-peer transmission (P2P).

As a first example, the TXOP Sharing Mode subfield values in the MU-RTS frame are shown in Table 1 below:

**Table 1:**

| TXOP Sharing Mode subfield value) | Description |
|---|---|
| 0 | MU-RTS that does not initiate MU-RTS TXOP sharing procedure |
| 1 | MU-RTS that initiates MU-RTS TXOP sharing procedure wherein a scheduled STA can only transmit PPDU(s) addressed to its associated AP |
| 2 | MU-RTS that initiates MU-RTS TXOP sharing procedure wherein a scheduled STA can transmit PPDU(s) addressed to its associated AP or addressed to another STA |
| 3 | Reserved |

According to Table 1, in the first sharing mode, the TXOP sharing mode subfield value is 1, and the scheduled STA (i.e., the first STA) can only transmit PPDU(s) addressed to its associated AP; in the second sharing mode, the TXOP sharing mode subfield value is 2, and the scheduled STA can transmit PPDU(s) addressed to its associated AP or addressed to another STA.

In an embodiment, the MU-RTS frame includes receiving address RA information.

In the first sharing mode, the RA information includes the Media Access Control Layer MAC address of the first STA, which is configured for the target AP to receive PPDU(s) from the first STA.

In the second sharing mode, the RA information includes the multicast address for peer-to-peer P2P communication of the first STA, which is configured for the second STA to receive PPDU(s) of the first STA.

As a second example, the format of the MU-RTS frame is shown, for example, in Table 2 below:

**Table 2:**

| Content | Frame Control | Duration | RA | TA | Common Info | User Info List | Padding | FCS |
|---|---|---|---|---|---|---|---|---|
| Octets | 2 | 2 | 6 | 6 | 8 or more | variable | variable | 4 |

In the first sharing mode, the receiving address field includes the MAC address of the first STA; in the second sharing mode, the receiving address field includes the multicast address for P2P communication of the first STA.

In an embodiment, the TXOP sharing information is carried in the Common Info field of the MU-RTS frame, such as the Common Info field in Table 2.

In an embodiment, the MU-RTS frame includes a time information element, and the TXOP corresponding to the TXOP sharing information is within a Service Period included in the time information element.

The time information element includes at least one of a Restricted Target Wake-Up Time (rTWT) element and a Quiet Element; i.e. the TXOP is within the Service Period of the rTWT element and/or the Quiet Element.

In an embodiment, the MU-RTS frame includes a first Duration element; such as the Duration element in the duration field shown in Table 2.

The duration indicated by the first Duration element is the target transmission duration or the first duration; the target transmission duration, i.e. the transmission duration allocated by the AP to the first STA, includes the (time) length of the MU-RTS frame, the length of the Clear To Send (CTS) frame, and possibly the length of the data frame. For example, the data frame is a data frame that is sent by the first STA to the target AP or the second STA.

The first duration is a sum of the length of the MU-RTS frame and the length of the Clear To Send CTS frame, i.e. the duration of the MU-RTS frame only includes the length of the MU-RTS frame and the length of the Clear To Send CTS frame.

In an embodiment, after sending a multi-user request to send MU-RTS frame, the method includes:
receiving a CTS frame; the CTS frame includes a second Duration element, and the second Duration element indicates a duration of the CTS frame.

The duration indicated by the second Duration element is the target transmission duration or the second duration; the second duration is the length of the CTS frame; the target transmission duration, i.e., the transmission duration allocated by the AP to the first STA, includes the (temporal) length of the MU-RTS frame, the length of the CTS frame itself, and possibly the length of the data frame. For example, the data frame is a data frame that the first STA sends to the target AP or the second STA. The duration indicated by the second Duration element may also include only the length of the CTS frame itself.

As a third example, referring to FIG. 3, it shows a schematic diagram of the TXOP sharing procedure in the first sharing mode.

The AP obtains a TXOP transmission opportunity, initiates a CTS-to-self mechanism, and first sends a MU-RTS frame to the first STA (STA1), and the TXOP Sharing Mode of the MU-RTS frame is 1; the MU-RTS frame carries TXOP sharing information, and the TXOP Sharing information includes a target transmission duration allocated to the first station device STA, and the target transmission duration is configured for the first STA to transmit data to the target AP (or associated AP).

Subsequently, the AP locks the response from STA 1 (Block Ack to STA 1) and does not send any PPDU(s) during the sharing time (the time shared or allocated to STA 1). At the end of the shared time (the PIFS time slot boundary is idle, at the end of the transmission of the last immediate response frame sent by the AP to the STA or after the reception of the last frame from the STA that does not require an immediate response), the AP may send data to other STAs (Non-AP STA2 in FIG. 3).

The first STA receives the MU-RTS frame, obtains the TXOP sharing information carried in the MU-RTS frame, determines the target transmission duration allocated to the first station device STA according to the TXOP sharing information, sends a CTS frame to the AP (CTS response to AP) and sends a single-user (SU) PPDU to the associated AP within the sharing time corresponding to the target transmission duration.

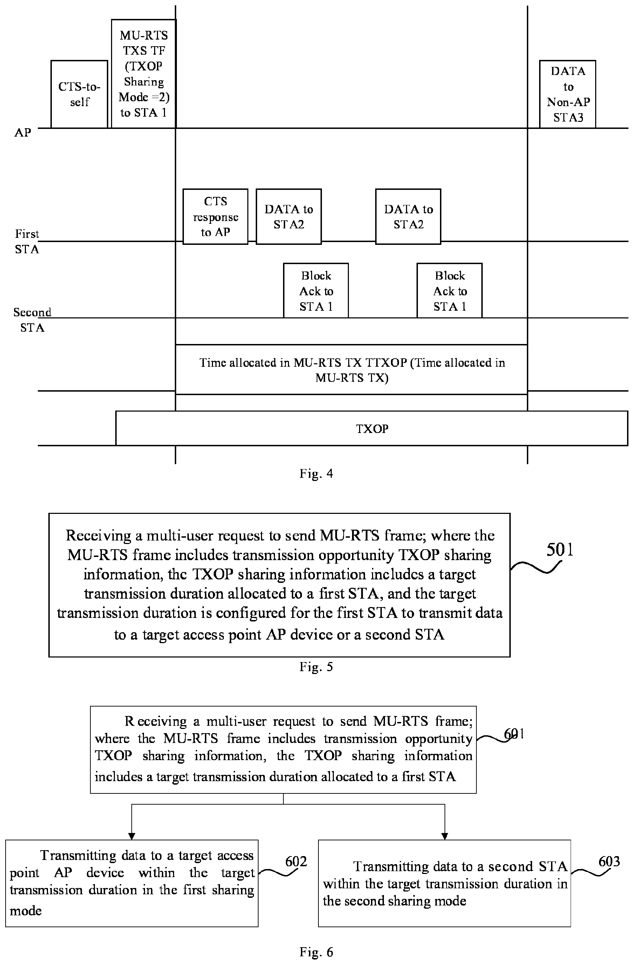

As a fourth example, referring to FIG. 4, it shows a schematic diagram of the TXOP sharing procedure in the second sharing mode.

The AP obtains a TXOP transmission opportunity, initiates a CTS-to-self mechanism, and first sends a MU-RTS frame to the first STA (STA1), and the TXOP Sharing Mode of the MU-RTS frame is 2; the MU-RTS frame carries TXOP sharing information, and the TXOP sharing information includes a target transmission duration allocated to the first station device STA, and the target transmission duration is configured for the first STA to transmit data to the second STA (STA3).

Subsequently, the AP does not send any PPDU(s) during the sharing time (time shared or allocated to STA1.) After the sharing time is over, data may be sent to other STAs (Non-AP STA3 in FIG. 4).

The first STA receives the MU-RTS frame, obtains the TXOP sharing information carried in the MU-RTS frame, determines the target transmission duration allocated to the first station device STA according to the TXOP sharing information, sends a CTS frame to the AP (CTS response to AP) and sends a data frame to the second STA (DATA TO STA2) within the sharing time corresponding to the target transmission duration.

The second STA locks the response to STA 1 (Block Ack to STA 1) and receives the data frame sent by the first STA during the sharing time.

In an embodiment, before sending a multi-user request to send MU-RTS frame, the method includes:
determining the MU-RTS frame, i.e., the AP first determines (or generates) a MU-RTS frame before sending the MU-RTS frame. The TXOP sharing information is carried in the MU-RTS frame to indicate the target transmission duration allocated to the first standby STA, thereby achieving TXOP sharing.

In an embodiment of the present disclosure, the AP sends the MU-RTS frame and carries transmission opportunity TXOP sharing information in the MU-RTS frame. The TXOP sharing information includes a target transmission duration allocated to the first station device STA, the target transmission duration is configured for the first STA to transmit data to the target access point AP device or the second STA. Sharing TXOP to the STA realizes the data transmission for the STA, improving the frequency utilization rate.

As shown in FIG. 5, embodiments of the present disclosure provide a communication method. For example, the method may be applied to the first site device STA, which may include the following steps:
Step 501, receiving a multi-user request to send MU-RTS frame; where the MU-RTS frame includes transmission opportunity TXOP sharing information, the TXOP sharing information includes a target transmission duration allocated to a first STA, and the target transmission duration is configured for the first STA to transmit data to a target access point AP device or a second STA.

In a wireless communication system, an AP occupies a channel through a competition mechanism, such as the CSMA/CA competition process. After the AP wins the competition, the AP initiates a TXOP transmission time, during which the channel is reserved to be occupied by the AP, and the transmissions for the remaining nodes are delayed. After the AP obtains the TXOP transmission time, it can send MU-RTS frames to multiple STAs.

MU-RTS frames are trigger frames, which are mainly used for channel reservation and RU allocation. Specifically, the MU-RTS sent by the AP is transmitted over the entire channel, and the node is in a passive receiving state and does not actively compete for the channel, realizing the AP reservation channel. In addition, based on the trigger frame attribute of the MU-RTS frame, it includes the RU allocation field.

TXOP sharing allows the AP to allocate a portion of the time within the acquired TXOP to the STA for transmitting data. After the AP has acquired a TXOP transmission opportunity, the AP sends a MU-RTS frame to the STA. After receiving the MU-RTS frame, the first STA obtains the TXOP sharing information in the MU-RTS frame, and determines the target transmission duration allocated to the first STA, so that the first STA transmits data within a time corresponding to the target transmission duration.

The target transmission duration is configured for the first STA to transmit data to a target access point AP device or a second STA; where the target AP device (or the target AP) may be an AP device (e.g., Associated AP) having an association relationship with the first STA, the association relationship is, for example, a communication connection (Link) with the first STA, and during the time corresponding to the target transmission duration, the first STA may send to the target AP. The first STA may also send PPDU(s) to the second STA to realize P2P communication.

For example, the total duration of a single TXOP is typically on the order of milliseconds, e.g., N milliseconds; when the AP shares the TXOP with the STA, the transmission time may be allocated to the STA in units of TUs, with each TU having a duration of 1 µs, 8 µs, or 16 µs; four bits or more may be configured to identify the target transmission duration. For example, when identifying by four bits, "0011" identifies three TUs.

In an embodiment of the present disclosure, the first STA receives a multi-user request to send MU-RTS frame, obtains TXOP sharing information and a target transmission duration allocated to the STA by the AP carried by the MU-RTS frame, and subsequently transmits data within the target transmission duration to the target access point AP device or the second STA, realizing the TXOP sharing and improving the frequency utilization rate.

In an embodiment, the TXOP sharing information includes a first association identifier AID of the first STA.

The AID table of the target AP device includes the first AID.

The AID is configured to identify the STA, and the AID corresponds to the target transmission duration; an AID table is set on the AP side, and the AID table includes the AID corresponding to that AP, and the AID is pre-bound to the MAC layer address of the corresponding STA. For example, if the range of AID is from 0 to 2007, an AP can associate up to 2007 nodes; where the position of AID=0 is a reserved field and is not allocated to the STA to represent all multicasts and broadcasts. Upon receipt of an association request frame initiated by the STA, the target AP feeds back an association response frame and allocates the AID to the STA and inform it of the AID in the association response frame.

The TXOP sharing information includes a first association identifier AID of the first STA, which facilitates the first STA to determine the target AP based on the AID table where the first AID is located.

In an embodiment, the TXOP sharing information includes TXOP sharing mode information.

The TXOP sharing mode information includes a first sharing mode or a second sharing mode.

In the first sharing mode, the target transmission duration is configured for the first STA to transmit data to a target AP device; the target AP device (or target AP) may be an AP device having an association relationship with the first STA, the association relationship is, for example, a communication connection (Link) with the first STA, and during the time corresponding to the target transmission duration, the first STA may send PPDU(s) to the target AP.

In the second sharing mode, the target transmission duration is configured for the first STA to transmit data to the second STA, and the first STA may also send PPDU(s) to the second STA, realizing peer-to-peer transmission. Referring to Table 1 above, in the first sharing mode, the TXOP sharing mode subfield value is 1, and the scheduled STA (i.e., the first STA) can only transmit PPDU(s) addressed to its associated AP; in the second sharing mode, the TXOP sharing mode subfield value is 2, and the scheduled STA can send PPDU(s) addressed to its associated AP or addressed to another STA.

In an embodiment, the MU-RTS frame includes receiving address RA information.

In the first sharing mode, the RA information includes the Media Access Control Layer MAC address of the first STA, which is configured for the target AP to receive PPDU(s) from the first STA.

In the second sharing mode, the RA information includes the multicast address for peer-to-peer P2P communication of the first STA, which is configured for the second STA to receive PPDU(s) of the first STA.

In an embodiment, after receiving a multi-user request to send MU-RTS frame, the method includes:
transmitting data to a target access point AP device or a second STA within the target transmission duration according to the TXOP sharing mode information; after receiving the MU-RTS frame, the first STA obtains the TXOP sharing information in the MU-RTS frame, determines the target transmission duration allocated to the first STA and the TXOP sharing mode information, and according to the TXOP sharing mode information, transmits data to the target access point AP device or the second STA within the target transmission duration.

Referring to FIG. 6, embodiments of the present disclosure provide a communication method. For example, the method may be applied to the first station device STA, and the method may include the following steps:
Step 601, receiving a multi-user request to send MU-RTS frame; where the MU-RTS frame includes transmission opportunity TXOP sharing information, the TXOP sharing information includes a target transmission duration allocated to a first STA, and the target transmission duration is configured for the first STA to transmit data to a target access point AP device or a second STA.

The TXOP sharing information includes TXOP sharing mode information.

The TXOP sharing mode information includes a first sharing mode or a second sharing mode.

TXOP sharing allows the AP to allocate a portion of the time within the acquired TXOP to the STA for transmitting data. After the AP has acquired a TXOP transmission opportunity, the AP sends a MU-RTS frame to the STA. After receiving the MU-RTS frame, the first STA obtains the TXOP sharing information in the MU-RTS frame, and determines a target transmission duration allocated to the first STA.

Step 602, transmitting data to a target access point AP device within the target transmission duration in the first sharing mode.

In combination with the above third example, in the first sharing mode, the first STA receives the MU-RTS frame, obtains the TXOP sharing information carried in the MU-RTS frame, determines the target transmission duration allocated to the first station device STA based on the TXOP sharing information, and sends a CTS frame to the AP (CTS response to the AP) and sends SUPPDU to the associated AP within the sharing time corresponding to the target transmission duration.

Step 603, transmitting data to the second STA within the target transmission duration in the second sharing mode.

In combination with the above fourth example, the first STA receives the MU-RTS frame, obtains the TXOP sharing information carried in the MU-RTS frame, determines a target transmission duration allocated to the first station device STA based on the TXOP sharing information, sends a CTS frame to the AP (CTS response to AP) and sends a data frame to the second STA (DATA to STA2) within the sharing time corresponding to the target transmission duration.

In an embodiment, the TXOP sharing information is carried in the Common Info field of the MU-RTS frame, such as the Common Info field in Table 2.

In an embodiment, the MU-RTS frame includes a time information element, and TXOP corresponding to the TXOP sharing information is within a service period included in the time information element.

The time information element includes at least one of a restricted target wake-up time rTWT element and a Quiet Element; i.e., the TXOP is within the service period of the rTWT element and/or the Quiet Element.

In an embodiment, the MU-RTS frame includes a first Duration element; such as the Duration element in the duration field shown in Table 2.

The duration indicated by the first Duration element is the target transmission duration or the first duration; the target transmission duration, i.e. the transmission duration allocated by the AP to the first STA, includes the (time) length of the MU-RTS frame, the length of the Clear To Send (CTS) frame, and possibly the length of the data frame. For example, the data frame is a data frame that is sent by the first STA to the target AP or the second STA.

The first duration is a sum of the length of the MU-RTS frame and the length of the Clear To Send CTS frame, i.e. the duration of the MU-RTS frame only includes the length of the MU-RTS frame and the length of the Clear To Send CTS frame.

In an embodiment, after receiving a multi-user request to send MU-RTS frame, the method includes:
sending a CTS frame; the CTS frame includes a second Duration element.

The duration indicated by the second Duration element is the target transmission duration or the second duration; the second duration is the length of the CTS frame.

The duration indicated by the second Duration element is the target transmission duration or the second duration; the second duration is the length of the CTS frame; the target transmission duration, i.e., the transmission duration allocated by the AP to the first STA, includes the (temporal) length of the MU-RTS frame, the length of the CTS frame itself, and possibly the length of the data frame. For example, the data frame is a data frame that the first STA sends to the target AP or the second STA. The duration indicated by the second Duration element may also include only the length of the CTS frame itself.

In the embodiments of the present disclosure, the first STA receives a multi-user request to send MU-RTS frame, obtains TXOP sharing information carried by the MU-RTS frame and a target transmission duration allocated to the STA by the AP, and subsequently transmits data to the target access point AP device or the second STA within the target transmission duration, realizing sharing the TXOP and enhancing the frequency utilization rate.

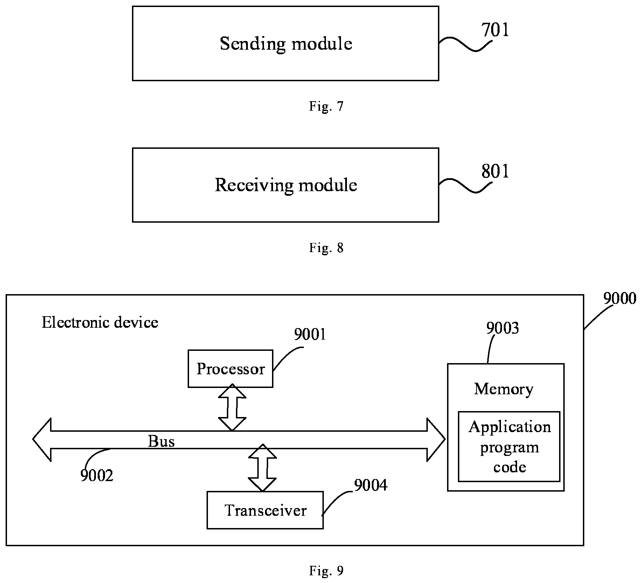

Based on the same principle as the method provided in the embodiments of the present disclosure, the embodiments of the present disclosure also provide an access point device, as shown in FIG. 7, which includes:
a sending module 701 for sending a multi-user request to send MU-RTS frame; where the MU-RTS frame includes transmission opportunity TXOP sharing information, the TXOP sharing information includes a target transmission duration allocated to a first station device STA, and the target transmission duration is configured for the first STA to transmit data to a target access point AP device or a second STA.

In a wireless communication system, an AP occupies a channel through a competition mechanism, such as the CSMA/CA competition process. After the AP wins the competition, the AP initiates a TXOP transmission time, during which the channel is reserved to be occupied by the AP, and transmissions for the remaining nodes are delayed. After the AP obtains the TXOP transmission time, it can send MU-RTS frames to multiple STAs.

MU-RTS frames are trigger frames, which are mainly used for channel reservation and RU allocation. Specifically, the MU-RTS sent by the AP is transmitted over the entire channel, and the node is in a passive receiving state and does not actively compete for the channel, realizing the AP reservation channel. In addition, based on the trigger frame attribute of the MU-RTS frame, it includes the RU allocation field.

TXOP sharing allows the AP to allocate a portion of the time within the acquired TXOP to the STA for transmitting data. After the AP has acquired a TXOP transmission opportunity, the AP sends a MU-RTS frame to the STA. The MU-RTS frame includes the transmission opportunity TXOP sharing information, and the TXOP sharing information includes the target transmission duration allocated to the first station device STA, and the AP shares the transmission time within TXOP to the first STA, and indicates a target transmission duration shared to the first STA, such that the first STA transmits data within the time of the target transmission duration.

The target transmission duration is configured for the first STA to transmit data to a target access point AP device or a second STA; where the target AP device (or the target AP) may be an AP device (e.g., Associated AP) having an association relationship with the first STA, the association relationship is, for example, a communication connection (Link) with the first STA, and during the time corresponding to the target transmission duration, the first STA may send PPDU(s) to the target AP. The first STA may also send PPDU(s) to the second STA to realize P2P communication.

For example, the total duration of a single TXOP is typically on the order of milliseconds, e.g., N milliseconds; when the AP shares the TXOP with the STA, the transmission time may be allocated to the STA in units of TUs, with each TU having a duration of 1 µs, 8 µs, or 16 µs; four bits or more can be configured to identify the target transmission duration. For example, when identifying by four bits, "0011" identifies three TUs.

For example, in embodiments of the present disclosure, the TXOP sharing information includes a first association identifier AID of the first STA;
The AID table of the target AP device includes the first AID.

For example, in embodiments of the present disclosure, the TXOP sharing information includes TXOP sharing mode information.

The TXOP sharing mode information includes a first sharing mode or a second sharing mode.

In the first sharing mode, the target transmission duration is configured for the first STA to transmit data to a target AP device.

In the second sharing mode, the target transmission duration is configured for the first STA to transmit data to the second STA.

For example, in embodiments of the present disclosure, the MU-RTS frame includes receiving address RA information.

In the first sharing mode, the RA information includes a media access control layer MAC address of the first STA.

In the second sharing mode, the RA information includes the multicast address for peer-to-peer P2P communication of the first STA.

For example, in the embodiment of the present disclosure, the TXOP sharing information is carried in the Common Info field of the MU-RTS frame.

For example, in the embodiment of the present disclosure, the MU-RTS frame includes a time information element, and the TXOP corresponding to the TXOP sharing information is within a service period included in the time information element.

The time information element includes at least one of a restricted target wake-up time rTWT element and a quiet element Quiet Element.

For example, in embodiments of the present disclosure, the MU-RTS frame includes a first Duration element;
The duration indicated by the first Duration element is the target transmission duration or the first duration; the first duration is the sum of the length of the MU-RTS frame and the length of the clear to send CTS frame.

For example, in embodiments of the present disclosure, after sending a multi-user request to send MU-RTS frame, the access point device includes:
CTS receiving module configured to receive a CTS frame; the CTS frame includes a second Duration element.

The duration indicated by the second Duration element is the target transmission duration or the second duration; the second duration is the length of the CTS frame.

For example, in embodiments of the present disclosure, before sending a multi-user request to send MU-RTS frame, the access point device includes:
a determining module configured to determine the MU-RTS frame.

In an embodiment of the present disclosure, the sending module 701 sends a MU-RTS frame and carries transmission opportunity TXOP sharing information in the MU-RTS frame, the TXOP sharing information includes a target transmission duration allocated to the first STA, and the target transmission duration is configured for the first STA to transmit data to the target AP device or the second STA to share the TXOP to the STA, realizing data transmission of STA and improving frequency utilization rate.

Based on the same principle as the method provided in the embodiments of the present disclosure, the embodiments of the present disclosure also provide a communication device including:
a MU-RTS sending module for sending a multi-user request to send MU-RTS frame; where the MU-RTS frame includes transmission opportunity TXOP sharing information, the TXOP sharing information includes a target transmission duration allocated to a first station device STA, and the target transmission duration is configured for the first STA to transmit data to a target access point AP device or a second STA.

The device also includes other modules of the access point device in the preceding embodiments, performing other functions performed by the access point device in the preceding embodiments, which will not be repeated herein.

Based on the same principle as the method provided in the present embodiments of the disclosure, the present embodiments of the disclosure also provide a station device. The station device is a first station device STA as shown in FIG. 8, and the station device includes:
receiving module 801 configured to receive a multi-user request to send MU-RTS frame; where the MU-RTS frame includes transmission opportunity TXOP sharing information, the TXOP sharing information includes a target transmission duration allocated to a first STA, and the target transmission duration is configured for the first STA to transmit data to a target access point AP device or a second STA.

In a wireless communication system, an AP occupies a channel through a competition mechanism, such as the CSMA/CA competition process. After the AP wins the competition, the AP initiates a TXOP transmission time, during which the channel is reserved to be occupied by the AP, and the transmissions for the remaining nodes are delayed. After the AP obtains the TXOP transmission time, it can send MU-RTS frames to the multiple STAs.

MU-RTS frames are trigger frames, which are mainly used for channel reservation and RU allocation. Specifically, the MU-RTS sent by the AP is transmitted over the entire channel, and the node is in a passive receiving state and does not actively compete for the channel, realizing the AP reservation channel. In addition, based on the trigger frame attribute of the MU-RTS frame, it includes the RU allocation field.

TXOP sharing allows the AP to allocate a portion of the time within the acquired TXOP to the STA for transmitting data. After the AP has acquired a TXOP transmission opportunity, the AP sends a MU-RTS frame to the STA. The first STA, after receiving the MU-RTS frame, acquires the TXOP sharing information in the MU-RTS frame and determines the target transmission duration allocated to the first STA such that the first STA transmits data within a time corresponding to the target transmission duration.

The target transmission duration is configured for the first STA to transmit data to a target access point AP device or a second STA; where the target AP device (or the target AP) may be an AP device (e.g., Associated AP) having an association relationship with the first STA, the association relationship is, for example, a communication connection (Link) with the first STA, and during the time corresponding to the target transmission duration, the first STA may send to the target AP. The first STA may also send PPDU(s) to the second STA to realize P2P communication.

For example, the total duration of a single TXOP is typically on the order of milliseconds, e.g., N milliseconds; when the AP shares the TXOP with the STA, the transmission time may be allocated to the STA in units of TUs, with each TU having a duration of 1 µs, 8 µs, or 16 µs; four bits or more may be configured to identify the target transmission duration. For example, when identifying by four bits, "0011" identifies three TUs.

For example, in embodiments of the present disclosure, the TXOP sharing information includes a first association identifier AID of the first STA.

The AID table of the target AP device includes the first AID.

For example, in embodiments of the present disclosure, the TXOP sharing information includes TXOP sharing mode information;
The TXOP sharing mode information includes a first sharing mode or a second sharing mode.

In the first sharing mode, the target transmission duration is configured for the first STA to transmit data to a target AP device.

In the second sharing mode, the target transmission duration is configured for the first STA to transmit data to the second STA.

For example, in embodiments of the present disclosure, the MU-RTS frame includes receiving address RA information.

In the first sharing mode, the RA information includes a media access control layer MAC address of the first STA.

In the second sharing mode, the RA information includes a multicast address for peer-to-peer P2P communication of the first STA.

For example, in embodiments of the present disclosure, the station device includes:
a transmitting module configured to transmit data to a target access point AP device or a second STA within the target transmission duration based on the TXOP sharing mode information.

For example, in embodiments of the present disclosure, the transmitting module includes:
a first transmitting submodule configured to transmit data to a target access point AP device within the target transmission duration in the first sharing mode;
a second transmitting submodule configured to transmit data to a second STA within the target transmission duration in the second sharing mode.

For example, in embodiments of the present disclosure, the TXOP sharing information is carried in the Common Info field of the MU-RTS frame.

For example, in embodiments of the present disclosure, the MU-RTS frame includes a time information element, and TXOP corresponding to the TXOP sharing information is within a service period included in the time information element.

The time information element includes at least one of a restricted target wake-up time rTWT element and a Quiet Element.

For example, in embodiments of the present disclosure, the MU-RTS frame includes a first Duration element.

The duration indicated by the first Duration element is the target transmission duration or the first duration; the first duration is the sum of the length of the MU-RTS frame and the length of the clear to send CTS frame.

For example, in embodiments of the present disclosure, the station device includes:
a CTS sending module configured to send a CTS frame; the CTS frame includes a second Duration element.

The duration indicated by the second Duration element is the target transmission duration or the second duration; the second duration is the length of the CTS frame.

In the embodiments of the present disclosure, the receiving module 801 receives a multi-user request to send MU-RTS frame, obtains TXOP sharing information and a target transmission duration allocated to the STA by the AP carried by the MU-RTS frame, and subsequently transmits data to the target access point AP device or the second STA within the target transmission duration, realizing the sharing of the TXOP to improve the frequency utilization rate.

Based on the same principle as the method provided in the embodiments of the present disclosure, the embodiments of the present disclosure also provide a communication device. The communication device is applied to the first station device STA, and the device includes:
a MU-RTS receiving module configured to receive a multi-user request to send MU-RTS frame; where the MU-RTS frame includes transmission opportunity TXOP sharing information, the TXOP sharing information includes a target transmission duration allocated to the first STA, and the target transmission duration is configured for the first STA to transmit data to a target access point AP device or a second STA.

The device further includes other modules of the station device in the preceding embodiment, performing other functions performed by the station device in the preceding embodiment, which will not be repeated herein.

In an embodiment, embodiments of the present disclosure also provide an electronic device. As shown in FIG. 9, the electronic device 9000 may be a server, including: a processor 9001 and a memory 9003. The processor 9001 and the memory 9003 are connected, e.g., via a bus 9002. For example, the electronic device 9000 may also include a transceiver 9004. It should be noted that the transceiver 9004 is not limited to one in practice, and the structure of the electronic device 9000 does not constitute a limitation of the embodiments of the present disclosure.

Processor 9001 can be a CPU (Central Processing Unit), general purpose processor, DSP (Digital Signal Processor), ASIC (Application Specific Integrated Circuit), FPGA (Field Programmable Gate Array), or other programmable logic device, transistor logic device, hardware component, or any combination thereof. It may implement or execute various exemplary logic boxes, modules, and circuits described in conjunction with the present disclosure. The processor 9001 may also be a combination that implements computational functions, such as including one or more microprocessor combinations, a combination of a DSP and a microprocessor, etc.

The bus 9002 may include a pathway to transfer information between the above-described components. The bus 9002 may be a PCI (Peripheral Component Interconnect) bus or an EISA (Extended Industry Standard Architecture) bus, etc. The bus 9002 can be categorized as an address bus, a data bus, a control bus, and so on. For ease of representation, only one bold line is shown in FIG. 9, but it does not mean that there is only one bus or one type of bus.

The memory 9003 may be a ROM (Read Only Memory) or other type of static memory device that can store static information and instructions, a RAM (Random Access Memory) or other type of dynamic memory device that can store information and instructions, or an EEPROM (Electrically Erasable Programmable Read Only Memory), CD-ROM (Compact Disc Read Only Memory) or other optical disk storage, optical disk storage (including compressed discs, laser discs, compact discs, digital general purpose discs, Blu-ray discs, etc.), disk storage media or other magnetic storage devices, or any other media capable of being used to carry or store desired program code in the form of instructions or data structures and capable of being accessed by a computer, but not limited thereto.

The memory 9003 is configured to store application program code for executing the solution of the present disclosure and is controlled for execution by the processor 9001. The processor 9001 is configured to execute the application program code stored in the memory 9003 to implement the foregoing method embodiments shown.

The electronic device includes, but is not limited to: a mobile terminal such as a cell phone, a laptop computer, a digital broadcast receiver, a PDA (personal digital assistant), a PAD (tablet computer), a PMP (portable multimedia player), an in-vehicle terminal (e.g., a vehicle navigation terminal), and the like, as well as a stationary terminal such as a digital TV, a desktop computer, and the like. The electronic device illustrated in FIG. 9 is merely an example and should not impose any limitation on the functionality and scope of use of the embodiments of the present disclosure.

The server provided in the present disclosure may be a standalone physical server, a server cluster or a distributed system formed by a plurality of physical servers, and a cloud server providing basic cloud computing services such as a cloud service, a cloud database, a cloud computing, a cloud function, a cloud storage, a network service, a cloud communication, a middleware service, a domain name service, a security service, a CDN, and a big data and artificial intelligence platform. The terminal may be a smartphone, a tablet, a laptop, a desktop computer, a smart speaker, a smart watch, and the like, but is not limited thereto. The terminal and the server may be connected directly or indirectly by wired or wireless communication, and the present disclosure is not limited herein.

Embodiments of the present disclosure provide a computer-readable storage medium with a computer program stored on the computer-readable storage medium, which, when run on the computer, enables the computer to execute the corresponding contents of the foregoing method embodiments.

It should be understood that although the individual steps in the flowchart of the accompanying drawings are shown in sequence as indicated by the arrows, the steps are not necessarily executed in the order indicated by the arrows in sequence. Unless expressly stated herein, the execution of these steps is not strictly limited in order, and they may be executed in other orders. Moreover, at least a portion of the steps in the flowchart of the accompanying drawings may include a plurality of sub-steps or a plurality of phases, which are not necessarily executed to completion at the same moment but may be executed at different moments, and whose order of execution is not necessarily sequential, but may be executed in turn or alternately with at least a portion of the other steps or sub-steps or phases of the other steps.

It is noted that the computer-readable medium described above in the present disclosure may be a computer-readable signal medium or a computer-readable storage medium or any combination thereof. The computer-readable storage medium may, for example, be - but is not limited to - a system, device, or apparatus or device of electricity, magnetism, light, electromagnetism, infrared, or semiconductors, or any combination of the above. More specific examples of computer-readable storage media may include, but are not limited to: electrical connections having one or more wires, portable computer disks, hard disks, random access memory (RAM), read-only memory (ROM), erasable programmable read-only memory (EPROM or flash memory), optical fibers, portable compact disk read-only memories (CD-ROM), optical storage devices, magnetic memory device, or any suitable combination of the foregoing. In the context of the present disclosure, a computer-readable storage medium may be any tangible medium containing or storing a program that may be used by or in combination with an instruction execution system, apparatus, or device. And in the context of the present disclosure, a computer-readable signal medium may include a data signal propagated in a baseband or as part of a carrier that carries computer-readable program code. Such propagated data signals may take a variety of forms, including, but not limited to, electromagnetic signals, optical signals, or any suitable combination of the foregoing. The computer-readable signal medium may also be any computer-readable medium other than a computer-readable storage medium that sends, propagates, or transmits a program for use by, or in combination with, an instruction-executing system, apparatus, or device. The program code contained on the computer-readable medium may be transmitted using any suitable medium, including, but not limited to: wire, fiber optic cable, RF (radio frequency), etc., or any suitable combination of the foregoing.

The above-described computer-readable medium may be contained in the above-described electronic device; or it may be present separately and not assembled into the electronic device.

The above-described computer-readable medium carries one or more programs that, when the above-described one or more programs are executed by the electronic device, cause the electronic device to perform the method shown in the above-described embodiment.

According to an aspect of the present disclosure, there is provided a computer program product or computer program including computer instructions which are stored in a computer-readable storage medium. A processor of the computer device reads the computer instructions from the computer-readable storage medium, and the processor executes the computer instructions such that the computer device performs the communication method provided in the embodiments described above.

Computer program code for performing the operations of the present disclosure may be written in one or more programming languages, or combinations thereof, including object-oriented programming languages - such as Java, Smalltalk, C++, and conventional procedural programming languages - such as "C" language or similar programming languages. The program code may be executed entirely on the user's computer, partially on the user's computer, as a stand-alone software package, partially on the user's computer and partially on a remote computer, or entirely on a remote computer or server. In the case involving a remote computer, the remote computer may be connected to the user computer via any kind of network - including a local area network (LAN) or a wide area network (WAN) - or, alternatively, it may be connected to an external computer (e.g., by utilizing an Internet service provider to connect via the Internet).

The flowcharts and block diagrams in the accompanying drawings illustrate the architecture, functionality, and operation of systems, methods, and computer program products that may be implemented in accordance with various embodiments of the present disclosure. At this point, each box in the flowcharts or block diagrams may represent a module, program segment, or portion of code that contains one or more executable instructions for implementing a specified logical function. It should also be noted that in some alternative implementations, the functions labeled in the boxes may also occur in a different order than those labeled in the accompanying drawings. For example, two consecutively represented boxes may actually be executed substantially in parallel, and they may sometimes be executed in reverse order, depending on the function involved. It is also noted that each of the boxes in the block diagram and/or flowchart, and combinations of the boxes in the block diagram and/or flowchart, may be implemented with a specialized hardware-based system that performs the specified function or operation, or may be implemented with a combination of specialized hardware and computer instructions.

Modules described in embodiments of the present disclosure may be implemented by way of software or may be implemented by way of hardware. For example, a module A may also be described as "module A for performing operation B".

The above description is only a preferred embodiment of the present disclosure and an illustration of the technical principles utilized. It should be understood by those skilled in the art that the scope of the present disclosure is not limited to a technical solution formed by a particular combination of the above-described technical features, but also covers other technical solutions formed by any combination of the above-described technical features or their equivalent without departing from the above-described disclosure concept. For example, a technical solution formed by interchanging the above features with (but not limited to) technical features with similar functions disclosed in the present disclosure.

## Claims

1. A communication method, comprising:
sending a multi-user request to send MU-RTS frame; wherein the MU-RTS frame comprises transmission opportunity TXOP sharing information, the TXOP sharing information comprises a target transmission duration allocated to a first station device STA, and the target transmission duration is configured for the first STA to transmit data to a target access point AP device or a second STA.

2. The communication method according to claim 1, wherein the TXOP sharing information comprises a first association identifier AID of the first STA; and
an AID table of the target AP device comprises the first AID.

3. The communication method according to claim 1, wherein the TXOP sharing information comprises TXOP sharing mode information;
the TXOP sharing mode information comprises a first sharing mode or a second sharing mode;
the target transmission duration is configured for the first STA to transmit data to the target AP device in the first sharing mode; and
the target transmission duration is configured for the first STA to transmit data to the second STA in the second sharing mode.

4. The communication method according to claim 3, wherein the MU-RTS frame comprises receiving address RA information;
the RA information comprises a media access control layer MAC address of the first STA in the first sharing mode; and
the RA information comprises a multicast address for peer-to-peer P2P communication of the first STA in the second sharing mode.

5. The communication method according to claim 1, wherein the TXOP sharing information is carried in a Common Info field of the MU-RTS frame.

6. The communication method according to any one of claims 1 to 5, wherein the MU-RTS frame comprises a time information element and a TXOP corresponding to the TXOP sharing information is within a service period comprised in the time information element; and
the time information element comprises at least one of a restricted target wake-up time rTWT element and a Quiet Element.

7. The communication method according to claim 1, wherein the MU-RTS frame comprises a first Duration element; and
a duration indicated by the first Duration element is the target transmission duration or a first duration; the first duration is a sum of a length of the MU-RTS frame and a length of a clear to send CTS frame.

8. The communication method according to claim 1, wherein after sending the multi-user request to send MU-RTS frame, the method comprises:
receiving a CTS frame; the CTS frame comprises a second Duration element;
a duration indicated by the second Duration element is the target transmission duration or a second duration; the second duration is a length of the CTS frame.

9. The communication method according to claim 1, wherein before sending the multi-user request to send MU-RTS frame, the method comprises:
determining the MU-RTS frame.

10. A communication method, performed by a first station device STA, comprising:
Receiving a multi-user request to send MU-RTS frame; wherein the MU-RTS frame comprises transmission opportunity TXOP sharing information, the TXOP sharing information comprises a target transmission duration allocated to the first STA, and the target transmission duration is configured for the first STA to transmit data to a target access point AP device or a second STA.

11. The communication method according to claim 10, wherein the TXOP sharing information comprises a first association identifier AID of the first STA; and
an AID table of the target AP device comprises the first AID.

12. The communication method according to claim 10, wherein the TXOP sharing information comprises TXOP sharing mode information;
the TXOP sharing mode information comprises a first sharing mode or a second sharing mode;
the target transmission duration is configured for the first STA to transmit data to the target AP device in the first sharing mode; and
the target transmission duration is configured for the first STA to transmit data to the second STA in the second sharing mode.

13. The communication method according to claim 12, wherein the MU-RTS frame comprises receiving address RA information;
the RA information comprises a media access control layer MAC address of the first STA in the first sharing mode; and
the RA information comprises a multicast address for peer-to-peer P2P communication of the first STA in the second sharing mode.

14. The communication method according to claim 12, wherein after receiving the multi-user request to send MU-RTS frame, the method comprises:
transmitting data to the target access point AP device or the second STA within the target transmission duration based on the TXOP sharing mode information.

15. The communication method according to claim 14, wherein transmitting data to the target access point AP device or the second STA within the target transmission duration based on the TXOP sharing mode information, comprises:
transmitting data to the target access point AP device within the target transmission duration in the first sharing mode; and
transmitting data to the second STA within the target transmission duration in the second sharing mode.

16. The communication method according to claim 10, wherein the TXOP sharing information is carried in a Common Info field of the MU-RTS frame.

17. The communication method according to claim 10, wherein the MU-RTS frame comprises a time information element and a TXOP corresponding to the TXOP sharing information is within a service period comprised in the time information element; and
the time information element comprises at least one of a restricted target wake-up time rTWT element and a Quiet Element.

18. The communication method according to claim 10, wherein the MU-RTS frame comprises a first Duration element; and
a duration indicated by the first Duration element is the target transmission duration or a first duration; the first duration is a sum of a length of the MU-RTS frame and a length of a clear to send CTS frame.

19. The communication method according to claim 10, wherein after receiving the multi-user request to send MU-RTS frame, the method comprises:
sending a CTS frame; the CTS frame comprises a second Duration element;
a duration indicated by the second Duration element is the target transmission duration or a second duration; the second duration is a length of the CTS frame.

20. An access point device, comprising:
a sending module for sending a multi-user request to send MU-RTS frame; wherein the MU-RTS frame comprises transmission opportunity TXOP sharing information, the TXOP sharing information comprises a target transmission duration allocated to a first station device STA, and the target transmission duration is configured for the first STA to transmit data to a target access point AP device or a second STA.

21. A station device, wherein the station device is a first station device STA, and the station device comprises:
a receiving module for receiving a multi-user request to send MU-RTS frame; wherein the MU-RTS frame comprises transmission opportunity TXOP sharing information, the TXOP sharing information comprises a target transmission duration allocated to the first STA, and the target transmission duration is configured for the first STA to transmit data to a target access point AP device or a second STA.

22. A communication device, comprising:
a MU-RTS sending module for sending a multi-user request to send MU-RTS frame; wherein the MU-RTS frame comprises transmission opportunity TXOP sharing information, the TXOP sharing information comprises a target transmission duration allocated to a first station device STA, and the target transmission duration is configured for the first STA to transmit data to a target access point AP device or a second STA.

23. A communication device, applied to a first station device STA, comprising:
a MU-RTS receiving module for receiving a multi-user request to send MU-RTS frame; wherein the MU-RTS frame comprises transmission opportunity TXOP sharing information, the TXOP sharing information comprises a target transmission duration allocated to the first STA, and the target transmission duration is configured for the first STA to transmit data to a target access point AP device or a second STA.

24. An electronic device, comprising a memory, a processor and a computer program stored on the memory and executable on the processor, wherein the processor executes the program to implement the method according to any one of claims 1 to 19.

25. A computer-readable storage medium, wherein a computer program is stored thereon, and the computer program, when executed by a processor, implements the method according to any one of claims 1 to 19.
